# EUROPEAN PATENT APPLICATION

(11) **EP 1 454 855 A2**
(43) Date of publication of application: **08.09.2004**
(21) Application number: 04004468.7
(22) Date of filing: 27.02.2004
(51) Int. Cl.: B65G 47/90

(54) **Method and device for transferring articles from a first line to a second line, situated downstream of the first line**

(30) Priority: 04.03.2003 IT BO20030112
(71) Applicant: MARCHESINI GROUP S.p.A., I-40065 Pian di Macina Pianoro (Bologna) (IT)
(72) Inventor: Monti, Giuseppe, 40065 Pianoro (Bologna) (IT)
(74) Representative: Dall'Olio, Giancarlo

(57) **Abstract**

The method for transferring articles from a first line to a second line, situated downstream of the first one includes: feeding the articles (5), arranged in row, to a picking up pad (3), situated at the end of the first conveying line (1); picking up of the leading article (5) of the row by picking up means (90), situated in a transferring device (100); transferring of the article (5) to a second conveying line (2), situated below with three subsequent movements (S1,S2,S3), the first of which has an almost horizontal and straight trajectory (T1), the second one has a curved, descendent trajectory (T2), and the third has a straight, vertical and descendent trajectory (T3). The movements are performed without changing the original arrangement of the article (5). Finally, the article (5) is placed and released either directly above the second line (2), or onto previously released articles to form a pile (P) of articles (5), with a corresponding series of transferring operations.

## Description

The invention relates to the technical field concerning packaging machines.

In this technical field, it is often necessary to connect a first line for feeding articles with a second line for receiving these articles, the second line leading to a packaging machine having seats for housing single or piled up articles.

In particular, it occurs that the two lines are situated at different levels, for example the receiving line downstream and at a lower level with respect to the feeding line.

The object of the present invention is to propose a method, which allows to transfer single articles from the first feeding line to the second receiving line, situated downstream of the first one, without interfering with the articles of the feeding line which follow the first article, and maintaining the arrangement of the article transferred from the first line to the second line.

Another object of the present invention is to propose a method, which allows to pile up a selected number of articles on the second line after a corresponding number of working cycles.

A further object of the present invention is to propose a method, which allows to transfer articles to the second line, singularly or piled up, independently from the articles size, conformation and orientation.

A still further object of the present invention is to propose a method which allows to transfer articles from the first to the second line, independently from the mutual height level positions of the lines.

Another object of the present invention is to propose a device, which transfers single articles from a first feeding line to a second receiving line, situated downstream of the first line, without interfering with the articles of the feeding line which follow the first article, and maintaining the spatial arrangement of the transferred article, all this independently from the size, conformation and orientation of the articles, and from the mutual height level positions of the lines.

Another object of the present invention is to propose a device, which obtains the previous objects and whose conformation allows to form piles of articles on the second line after a corresponding number of working cycles, without using temporary storage magazines situated between the two feeding and receiving lines.

The above mentioned objects are achieved by the features of the independent claims, while preferred features are defined in the dependent claims.

The invention will now be described, by way of example, with reference to the accompanying drawings, in which:
- Figure 1 is a lateral schematic view of the working sequence of the proposed method;
- Figures 1A and 1B are enlarged views of the detail K of Figure 1, in two possible situations;
- Figure 2 is the same view as Figure 1, pointing out an interesting technical-functional aspect, which can be obtained by the proposed method;
- Figures 3A, 3B, 3C, 3D are schematic views of a device, which carries out the method, in subsequent working moments;
- Figure 4 is a schematic view of a device particular for picking up closed articles;
- Figure 5 is a schematic view of a constructive variant aimed at picking up open bowl containers.

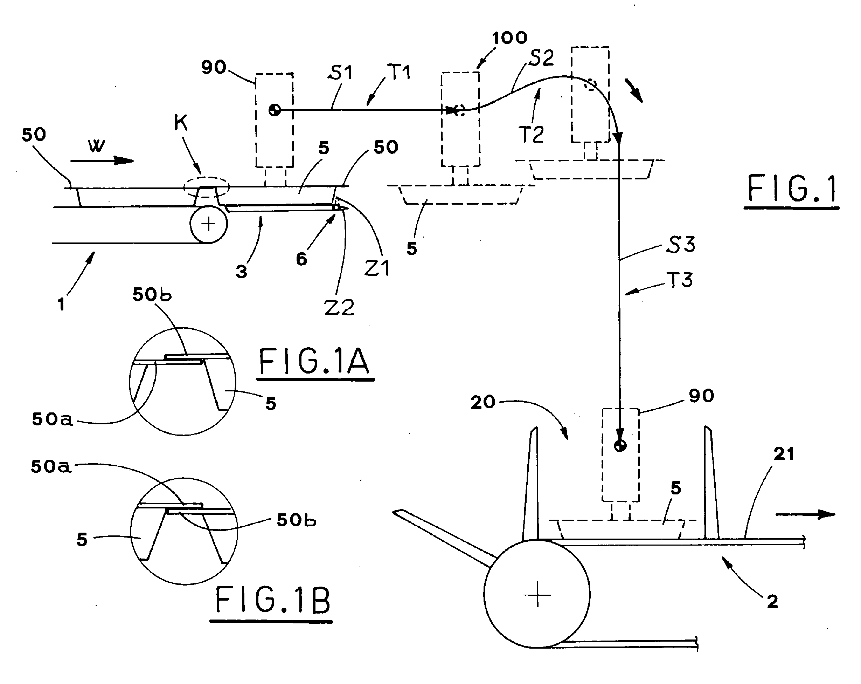

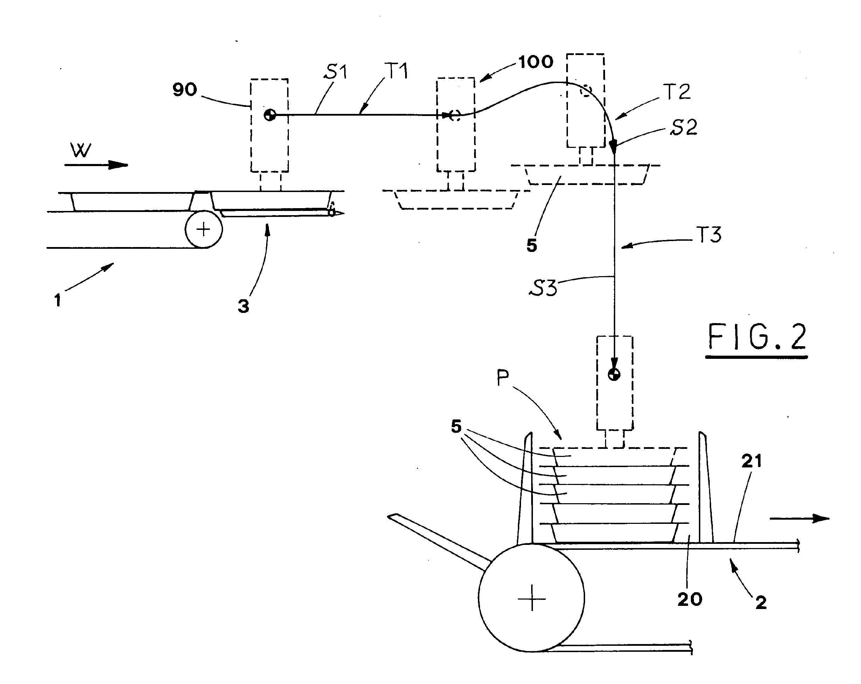

Figures 1 and 2 show schematically the sequence of a working cycle of the proposed method for transferring articles 5 from a first feeding line 1 to a second receiving line 2, situated at a lower level and downstream of the first one.

The first line 1 carries the articles 5, arranged in row, toward a pad 3, where stopping means 6 move between two extreme positions Z1, Z2, in which they respectively stop and do not interfere with the first article of the row.

The second line 2 has, for example, a series of holders, which define holding spaces 20, in which the articles 5 can be introduced and carried to a station, in which they are boxed or undergo other operation, which are not shown.

By way of a not limiting example, the shown articles 5 are heat-formed bowl containers filled with products, not shown, introduced therein previously, and with the top open or closed with a suitable sealing film or similar means.

Along their perimeter, the bowl containers 5 have a horizontal edge 50, which can interfere with the edge of the adjacent container; more precisely, the rear edge 50b of the leading container 5 can be situated above the fore edge 50a of the subsequent container (Figure 1A), or vice-versa (Figure 1B), in an absolutely casual and out of control way.

For this purpose, the leading container 5 must be picked up from the row in such a way, as not to be hindered by the above mentioned edge overlapping.

The proposed method includes:
- feeding the articles 5, arranged in a row, to a picking up pad 3, situated at the end of the first line 1;
- picking up the leading article 5 of the row by picking up means 90, situated in a transferring device 100;
- taking the aforementioned article 5 off the picking up pad 3, with a first movement S1 having a first trajectory T1 directed downstream with respect to the first line 1 movement direction W;
- diverging the above article 5 with a second movement S2, following the first one and having a descending second trajectory T2;
- lowering the above article 5 with a third movement S3, following the second one and having a third trajectory T3, which is straight, vertical and with a selected extension;
- placing and releasing the above article 5 at a prefixed level above the second line 2.

Before being picked up by the picking up means 90, the articles 5 are moved to a picking up pad 3, provided for technical-operative reasons, which are not concerned by the invention and are easily understood by those skilled in the art.

Possibly, the pad 3 is omitted and the first line 1 is operated in suitable way, so as to allow the articles to be picked up directly therefrom, for instance in a position corresponding to the end of the first line.

During the first, second and third movement, the original arrangement of the article 5 is maintained.

The trajectory T1 of the first movement S1 can be ascending or descending, for example straight, or horizontal, as in Figure 1.

The trajectory T2 of the second movement S2 can be defined by a combination of consecutive straight and/or curved sections.

According to the method, an article 5 is placed and released onto the transport surface 21 of the above second line 2 (Figure 1) at each working cycle, in case only one article 5 is to inserted in each holding space 20 of the second line.

According to this working mode, each time the leading article 5 is picked up from the first line 1, the second line moves one step forward.

The proposed method allows also formation of a pile P of articles 5 in each holding space of the second line 2 (Figure 2).

In such case, a series of working cycles for transferring articles' 5 is to be performed, during which the first article 5 of the pile P is placed and released on the transport surface 21, within a holding space 20, while the subsequent articles 5 are placed and released above the previous articles, obviously, maintaining the second line 2 motionless.

Consequently, the placing and releasing height level of the articles is to be set each time higher with respect to the transport surface 21 of the second line 2, by progressive reduction of the motion extension by which the article 5 is lowered during the third straight vertical movement. Obviously, the maximum extent of the third movement is grater than the maximum height of the pile P.

In the shown example, the second line 2 is situated.at a lower level with respect to the first line 1.

The proposed method can be applied even if the line 2 is situated at the same, or at a higher level with respect to the line 1.

This technical-functional aspect can be obtained by the second movement having the trajectory T2 ascending, so as to raise the article 5 to such a level, as to allow to define, for the third movement S3, a straight vertical downward movement in a range greater than the maximum height of the pile P to be obtained.

The just described method can be carried out by transferring devices 100 and relative gripping means 90, which have different conformations.

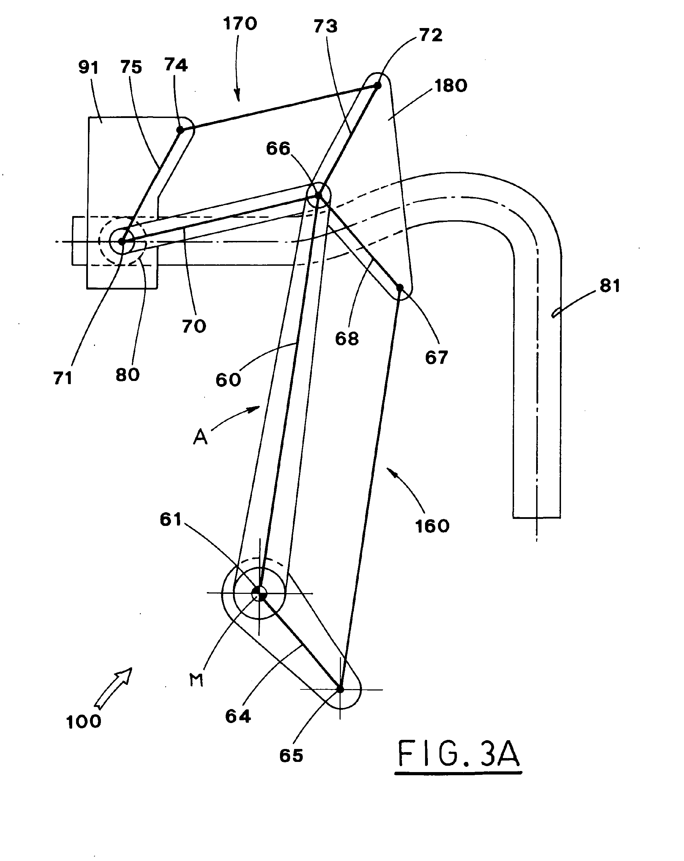

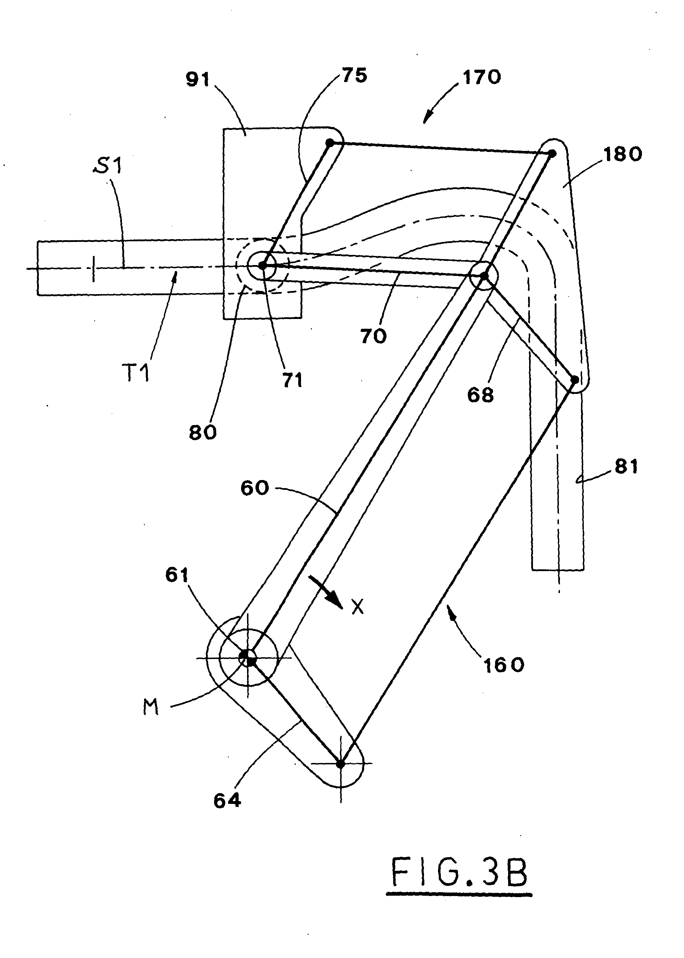

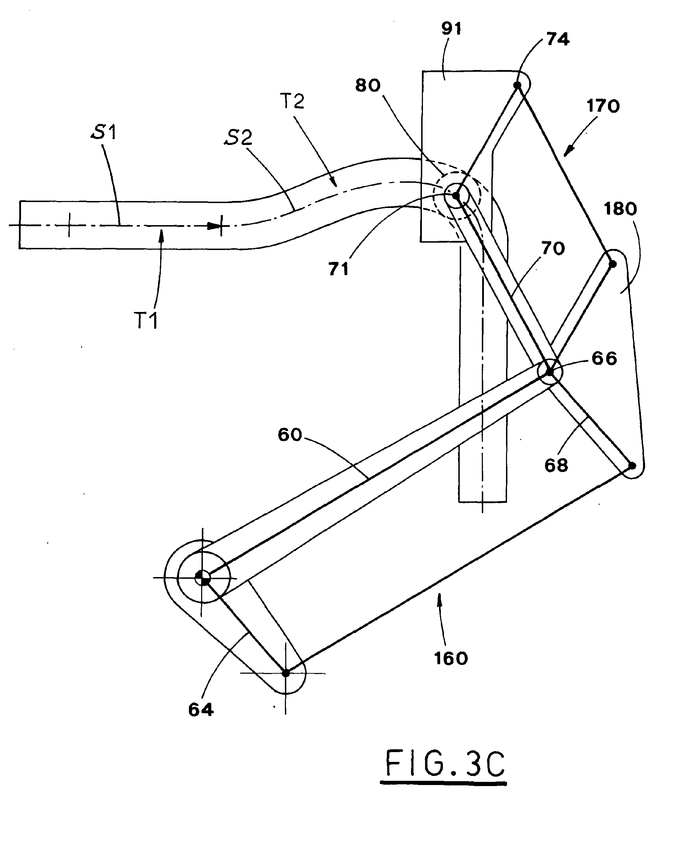

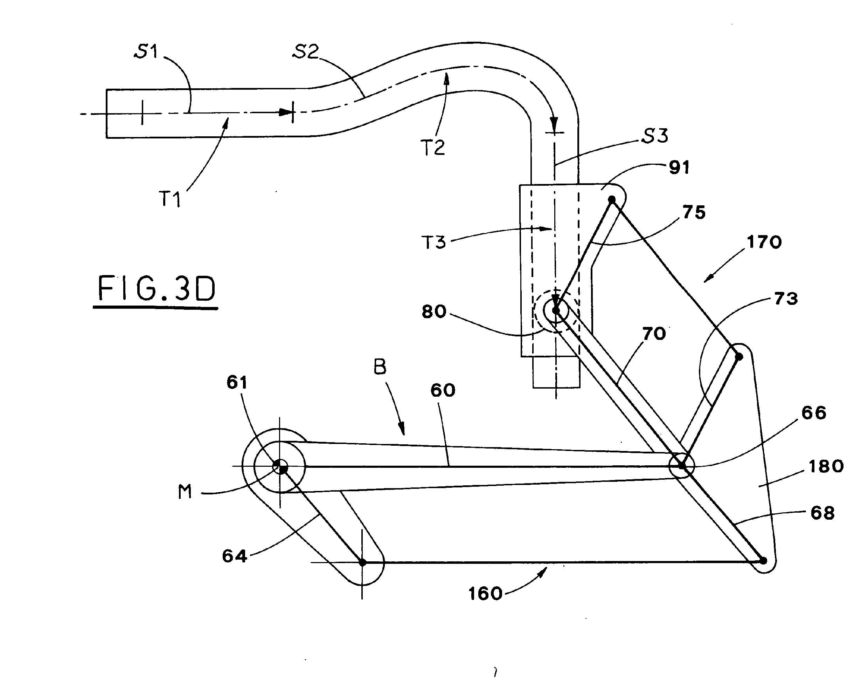

For example, a description will follow of a new and original embodiment of the above device 100, which transfers articles from the first line 1 to the second line 2, situated at a lower level with respect to the first one, (Figures 3A, 3B, 3C, 3D).

The transferring device 100 includes a first bar 60, hinged about a pivot 61 and swinging in a vertical plane between two extreme positions, respectively a high position A (Figure 3A) and low position B (Figure 3D), distant form each other by a prefixed angle. The bar 60 is operated by a motor M situated, for example, in line with the pivot 61.

The first bar 60 is one of the longer bars of a first four-bar linkage 160, which has a stationary smaller bar formed by a bracket 64, connecting the positions of the pivot 61 and of a hinge join 65, suitably situated therebelow.

A second bar 70 is hinged to a free end of the first bar 60 at an hinge joint 66.

Also the second bar 70 swings in a vertical plane and is arranged angularly with respect to the first bar 60.

The remaining shorter bar 68 of the first four-bar linkage 160, parallel to the stationary shorter bar 64, extends between the hinge joint 66 and the hinge joint 67.

The second bar 70 extends from the hinge joint 66 to an hinge joint 71 and forms also one of the longer side of a second four-bar linkage 170, pivoted to the first one at the above hinge joint 66.

A smaller side 73 of the second four-bar linkage 170 is formed between the hinge joint 66 and an hinge joint 72, and its length is equal to the length of the shorter bar 68 of the first four-bar linkage 160, situated beside.

The first and the second four-bar linkages 160, 170 are interconnected by means of a plate 180, which stabilizes the mutual position of the respective shorter sides 68, 73, both pivoted to the hinge joint 66.

The remaining shorter side 75 of the second four-bar linkage 170, parallel to the shorter side 73 thereof, is defined between the hinge joint 71, at the end of the bar 70, and another hinge joint 74.

The above shorter side 75 is integral with a support 91, to which the picking up means 90 are fastened.

A roller 80 is rotatably connected to the support 91, and its rotation axis is centered with respect to the hinge joint 71.

The roller 80 is engaged into a suitably shaped track 81, extending from the first feeding line 1 to the second receiving line 2.

The track 81 has such a shape as to define the path covered by the support 91, in accordance with the trajectories T1, T2, T3 of the proposed method.

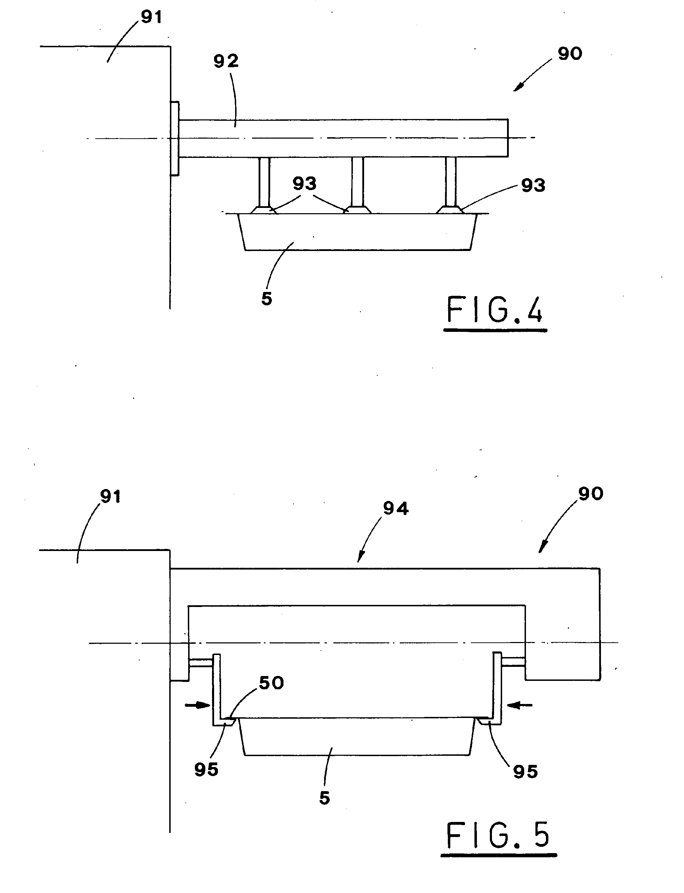

Figures 4 and 5 show schematically two embodiments of the picking up means 90, connected to the transferring device 100, respectively for articles 5 (or bowl containers) close in their upper part, and for open bowl containers.

In the first case, a horizontal arm 92 is cantilevered to the support 91, and a plurality of suction cups 93 extend downwards from the horizontal arm 92.

The suction cups 93 are set under vacuum condition by known suction means, not shown, to pick up and hold the upper surface of the article 5 (or the sealing film of the bowl container).

In the second case illustrated, a group 94, equipped with mobile catchers 95, is cantilevered to the support 91.

The catchers 95 are operated horizontally by known, not shown means, (see arrows in the Figure), to catch and support a bowl container under the outer edge 50.

Figure 3A shows the transferring device 100 in the configuration corresponding to the described step of the method, in which the leading article 5 is picked up from the picking up pad 3, at the end of the first line 1.

In this situation, the first bar 60 is situated in its high position A, while the second bar 70 is suitably arranged, consequently to the engagement of the roller 80 with the track 81, so that the position of the support 91 and of the picking up means 90 is correct to pick up the article 5.

Figure 3B shows the transferring device 100 in the described step of the method, in which the leading article 5 has been picked up from the pad 3, at the end of the first movement S1, with the trajectory T1 nearly horizontal and straight.

In order to perform this step, the motor M is operated in the direction X, to rotate the first bar 60 to its low position B.

The roller 80, running along the track 81, controls the first trajectory T1 for the coaxial hinge joint 71 and consequently, for the support 91.

The configuration of the first four-bar linkage 160 is defined by the position of the first bar 60 with respect to the position of the shorter stationary side defined by the bracket 64.

The configuration of the second four-arm linkage 170 is determined by the interaction of the roller 80, which is in engagement with the track 81 to define the orientation of the second bar 70, and of the plate 180. Therefore, the shorter sides 73, 75 of the second four-bar linkage 170 maintain the same inclination as at the beginning, with an angle unchanged with respect to the shorter sides 64, 68 of the first.four-bar linkage 160.

Therefore, the combination of the movements of the first bar 60 and of the four-bar linkages 160, 170, together with the track 81 profile, determine the trajectory of the support 91 movements, and consequently, of the article 5 picked up by the picking up means 90.

The same procedure allows to obtain, as follows, the configuration shown in Figure 3C, in an intermediate point of the curved trajectory T2 of the second movement S2, and the one shown in Figure 3D, at the end of the third movement S3 with straight, vertical trajectory T3, in which the first bar 60 is situated in its lower position B.

As pointed out in the figures, the geometry of the two four-bar linkages 160, 170 is such, as to maintain constant the spatial orientation of the support 91 of the picking up means 90, and consequently, of the article 5 (Figures 1 and 2).

As it has already been mentioned, management and control means, not shown, suitably acting on the motor M, can progressively reduce the third movement S3, to place and release the article 5 each time at a higher level, to form a pile P, in accordance with the method.

The advantages of the proposed method result to be obvious from the above description.

First of all, the leading article picking up step is not obstructed by the overlapping of the edges, independently from the picking up mode, because it is done with the first movement S1 almost horizontal and straight.

Another advantage results from the possibility to form, on the second line, a pile of articles, or to introduce correctly an article of considerable height, into the holding space defined by the holders of the second line, due to the third movement S3 having vertical and straight trajectory.

What above, has been obtained independently from the articles conformation and size, and from the mutual height positioning of the two lines 1, 2.

A further advantage of the proposed method derives from the fact that the article arrangement remains unchanged during its conveying.

The described transferring device 100 can perfectly perform various step of the method, however alternative constructive solutions are possible, either entirely mechanical, like the proposed one, or with electronic control of the moving axes.

Consequently, the proposed method and device resolve the technical problem and obtain the objects mentioned in the introduction.

## Claims

1. Method for transferring articles from a first line to a second line, situated downstream of the first line, **characterized in that** in includes:
- feeding said articles (5), arranged in a row along said first line;
- picking up the leading article (5) of the row by picking up means (90), fastened to a transferring device (100);
- removing the said article (5) from said first line with a first movement (S1) having a first trajectory (T1) directed downstream with respect to said first line (1) movement direction (W), maintaining unchanged the spatial arrangement of the article;
- diverging said article (5) with a second movement (S2), following the first movement and having such a second trajectory (T2), as to place said article above said second line (2), maintaining unchanged the spatial arrangement of the article;
- lowering said article (5) with a third movement (S3), following the second movement and having a straight, vertical third trajectory (T3), which has a prefixed extension, maintaining unchanged the spatial arrangement of the article;
- placing and releasing said article (5) at a prefixed height level above said second line (2).

2. Method, according to claim 1, **characterized in that** said second line (2) is situated at a lower level with respect to the first one and said second movement (S2) is obtained by a descending trajectory.

3. Method, according to claim 1, **characterized in that** said second line (2) is situated at the same or higher level with respect to the first line (1) and said second movement (S2) is obtained by an ascending trajectory.

4. Method, according to claim 1 or 2 or 3, **characterized in that** said article (5) is placed and released on a transport surface (21) of said second line (2).

5. Method, according to claim 1 or 2 or 3, **characterized in that** said article (5) is placed and released over a pile (15) formed by at least one article (5), released previously onto said transport surface (21) of said second line (2).

6. Method, according to any of the previous claims, **characterized in that** said first trajectory (T1) of said first movement (S1) is ascending.

7. Method, according to any of the previous claims, **characterized in that** said first trajectory (T1) of said first movement (S1) is descending.

8. Method, according to any of the previous claims, **characterized in that** said first trajectory (T1) of said first movement (S1) is straight.

9. Method, according to any of the previous claims, **characterized in that** said first trajectory (T1) of said first movement (S1) is horizontal.

10. Method, according to claim 1 or 2 or 3, **characterized in that** said second trajectory (T2) of the second movement (S2) is defined by a combination of subsequent straight and/or curved sections.

11. Method according to. any of the previous claims, **characterized in that** the articles are transferred to a to a picking up pad (3), situated at the end of said first line (1) before being picked up.

12. Transferring device for transferring articles from a first line to a second line situated at a lower height level and downstream with respect to the first one, said transferring device (100) being **characterized in that** it includes:
a first bar (60), articulated to a pivot (61) and swinging in a vertical plane between two extreme positions, a high position (A) and a low position (B), angularly distanced by a selected angle, said first bar being operated by a motor (M);
a second bar (70), hinged to a free end of said first bar (60), at an hinge joint (66), with said second bar (70) swinging in a vertical plane and arranged at an angle with respect to said first bar (60);
a first four-bar linkage (160) with a longer side defined by said first bar (60), and with a shorter side (64) kept stationary and defined between said pivot (61) of said first bar (60) and a relative hinge joint (65);
a second four-bar linkage (170) with a longer side defined by said second bar (70), with said second four-bar linkage (170) being pivoted to the first four-bar linkage at said hinge joint (66) and interconnected to said first four-bar linkage by a plate (180) for stabilizing mutual position of two shorter sides (68,73) pivoted at said hinge joint (66) and belonging respectively to said first and second four-bar linkages (160,170);
a support (91) for supporting picking up means (90) for picking up said articles (5), with said support (91) being fastened to a shorter side (75) of said second four-bar linkage (170), which is pivoted to a free end of said second bar (70);
guiding means (80,81), connected to said support (91) for defining a movement trajectory for the support during said rotation of the first bar (60) in combination with the shape assumed by said four-bar linkages (160,170), said movement trajectory being such that, when said first bar (60) is in said high position (A), said support (91) and the connected picking up means (91) are moved to pick up a leading article (5) from a row of articles (5) fed along said first line, said support (91) and picking up means (90) and leading article (5) being then guided with constant arrangement to perform a first movement (S1), having a first trajectory (T1) almost horizontal and straight in the same direction as the first line (1) forward movement direction (W), a second movement (S2), following the first movement, having curved descending second trajectory (T2) and a third movement (S3), following the second movement, having vertical, straight and descending third trajectory (T3), up to a selected height level, above said second line (2) and corresponding to said low position (B) of said first bar (60), with said article (5) being placed and released at said selected level.

13. Transferring device, according to claim 12, **characterized in that** said guiding means include a roller (80) rotatably fastened to said support (91), in a coaxial position with an hinge joint (71) of said second four-bar linkage (170), situated at a free end of said second bar (70), with said roller (80) being engaged within a track (81) extending between said first and second lines (1,2) and shaped in such a way, as to define a path corresponding to said first, second and third trajectories (T1,T2,T3) of said first, second and third movements (S1, S2, S3).

14. Transferring device, according to claim 12, **characterized in that** said picking up means (90), connected to said support (90), include a horizontal arm (92) with a plurality of suction cups (93) extending downwards and set in a vacuum by suction means, to pick up and hold the upper surface of said article (5).

15. Transferring device, according to claim 12, in which said articles (5) feature a horizontal edge (50) along their perimeter, **characterized in that** said picking up means include a group (94), having moving catchers (95) operated horizontally to engage, from bottom, with said edge (50) to pick up and support said article (5).

16. Transferring device, according to claim 12, **characterized in that** it includes management and control means for acting on said motor (M) to determine said low position (B) of the first bar (60), and consequently, to define a selected height level at which said article (5) is to be placed and released onto said second line (2).

17. Transferring device, according to claims 12 to 16, **characterized in that** it includes a picking up pad (3) situated at the end of said first line (1), the articles (5) being transferred to said picking up pad before being picked up by said picking up means (90).
